(19) **Europäisches Patentamt / European Patent Office / Office européen des brevets**

(11) **EP 3 959 252 B1**

(12) **FASCICULE DE BREVET EUROPEEN**

(45) Date de publication et mention de la délivrance du brevet:
**15.10.2025  Bulletin 2025/42**

(21) Numéro de dépôt: **20719475.4**

(22) Date de dépôt: **23.04.2020**

(51) Classification Internationale des Brevets (IPC):
**C08G 18/42** *(2006.01)*    **C08G 63/48** *(2006.01)*
**C09D 167/02** *(2006.01)*    **C09D 175/04** *(2006.01)*

(52) Classification Coopérative des Brevets (CPC):
**C08G 18/4288; C08G 63/48; C09D 167/02; C09D 175/04**

(86) Numéro de dépôt international:
**PCT/EP2020/061342**

(87) Numéro de publication internationale:
**WO 2020/216849 (29.10.2020 Gazette 2020/44)**

(54) **RESINE POLYESTER REACTIVE A BASE D'UN POLYOL TRIGLYCERIDE D'ACIDE GRAS HYDROXYLE ET/OU EPOXYDE POUR REVETEMENTS A HAUT EXTRAIT SEC**

REAKTIVES POLYESTERHARZ AUF DER BASIS EINES HYDROXYLIERTEN UND/ODER EPOXIDIERTEN FETTSÄURETRIGLYCERIDPOLYOLS FÜR BESCHICHTUNGEN MIT HOHEM FESTSTOFFGEHALT

REACTIVE POLYESTER RESIN BASED ON A HYDROXYLATED AND/OR EPOXIDIZED FATTY ACID  TRIGLYCERIDE POLYOL FOR COATINGS WITH HIGH SOLIDS CONTENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.04.2019  FR 1904303**

(43) Date de publication de la demande:
**02.03.2022  Bulletin 2022/09**

(73) Titulaire: **ARKEMA FRANCE**
**92800 Puteaux (FR)**

(72) Inventeurs:
• **PIFFOUX, Laurent**
  **60550 VERNEUIL EN HALATTE (FR)**
• **HAMEL, Jean-Yves**
  **60550 VERNEUIL EN HALATTE (FR)**
• **OZERAY, Hervé**
  **60550 VERNEUIL EN HALATTE (FR)**
• **RIONDEL, Alain**
  **60550 VERNEUIL EN HALATTE (FR)**
• **SATZ, Benoit**
  **60550 VERNEUIL EN HALATTE (FR)**

(74) Mandataire: **Arkema Patent**
**Arkema France**
**DRD-DPI**
**51, Esplanade du Général de Gaulle**
**CS 10478**
**92907 Paris La Défense Cedex (FR)**

(56) Documents cités:
**CN-A- 107 828 053      DE-A1- 2 903 022**
**US-A1- 2018 179 414      US-B2- 7 794 814**

**Description**

La présente invention concerne une résine polyester réactive, hydroxylée et/ou carboxylée, ayant une composition spécifique, caractérisée en particulier par le choix spécifique sélectif de son composant polyol et plus particulièrement en combinaison avec un choix spécifique de son composant polyacide, avec ledit composant polyol comprenant comme polyol un triglycéride d'acide gras hydroxylé et/ou époxydé (triglycéride). En particulier, ledit polyol est exempt de monoalcools et plus particulièrement le composant polyacide est exempt de monoacides gras insaturés ou saturés. Ladite résine est une résine en milieu solvant ayant un haut extrait sec et d'au moins 50%, de préférence d'au moins 60%, plus préférentiellement de 65 à 90% et encore plus préférentiellement de 65 à 85% en poids et de viscosité convenable pour revêtements à haut extrait sec et en particulier ayant en plus un haut pouvoir de rendement, plus particulièrement pour revêtements de feuilles métalliques (« coil coatings ») ou revêtement pour emballages métalliques (« packaging coatings »). CN 107 828 053 A concerne une résine de polyester présentant une haute teneur en solide et une faible viscosité, et utilisée pour revêtir entre autres des surfaces métalliques. L'exemple 1 de CN 107 828 053 A décrit la réaction entre de l'huile de ricin, l'acide isophthalique, l'acide adipique, le glycerol, le trimethylolpropane, le butanediol. Un solvant organique est ajouté. L'indice d'hydroxyle de la résine est supérieur ou égal à 135 mg KOH/g et son poids moléculaire entre 2200 et 3000.

WO2016/203136 décrit déjà des résines polyesters réactives, hydroxylées et/ou carboxylées ayant à un taux d'huile nul, pour revêtements à haut extrait sec et haut pouvoir couvrant. Aucune présence spécifique de polyol triglycéride d'acide gras hydroxylé et/ou époxydé n'est décrite ou suggérée ni son effet sur les performances améliorées obtenues.

L'objectif de la présente invention est donc d'améliorer, par la structure spécifique de la résine liant utilisé, le taux de solides avec un taux en poids d'au moins 50% en milieu solvant organique, comme cité ci-haut, tout en maintenant une viscosité de la composition de revêtement convenable pour l'application finale, en particulier pour l'application sur feuilles métalliques ou pour emballage métallique. Cette viscosité « convenable » doit être une viscosité Brookfield inférieure à 1000 mPa.s à la température d'application allant de 15 à 35°C, ladite viscosité Brookfield étant mesurée selon la méthode ISO 3219. Concernant la résine visée, elle doit avoir une viscosité inférieure à 20000 mPa.s en solution dans un solvant organique à 25°C avec un taux de résine (extrait sec) de 80% en poids. Concernant le haut pouvoir de rendement dudit revêtement comprenant ladite résine, de préférence, il est supérieur à 400 m² par kg de revêtement pour une épaisseur de 1 $\mu$m. En particulier, une augmentation (amélioration ou gain de rendement) d'au moins 8% et de préférence de 9 à 20% du pouvoir de rendement est obtenue par rapport à un revêtement comprenant une résine polyester qui n'a pas la composition spécifique de résine telle que définie selon la présente invention. Le haut pouvoir de rendement dudit revêtement selon l'invention permet en particulier une amélioration significative de la protection anticorrosion desdites feuilles métalliques ou dudit emballage métallique ainsi revêtus.

La présente invention est telle que définie dans les revendications.

La présente invention concerne d'abord une résine polyester hydroxylée et/ou carboxylée de structure spécifique obtenue à partir d'une composition spécifique de composant polyol a) de ladite résine.

L'invention concerne également une solution de ladite résine dans un solvant organique, en particulier à un taux de résine par rapport au poids de ladite solution d'au moins 50%, de préférence d'au moins 60%, en particulier allant de 60 à 90%, plus préférentiellement de 65 à 90% et encore plus préférentiellement de 65 à 85%.

L'invention couvre également une composition réticulable comprenant ladite résine, en particulier une composition de revêtement et plus particulièrement une composition de revêtements pour feuilles métalliques ou pour emballages métalliques.

Est couverte également l'utilisation de ladite résine ou d'une solution de ladite résine comme liant dans une composition de revêtement en milieu solvant organique, en particulier pour revêtements réticulables et plus particulièrement pour augmenter le pouvoir de rendement dudit revêtement ou pour revêtements de protection, en particulier anticorrosion pour métal.

Un autre objet de l'invention est le produit fini qui est un revêtement qui résulte de l'utilisation de ladite résine ou d'une solution de ladite résine ou d'une composition réticulable la contenant, en particulier ayant un pouvoir de rendement augmenté (amélioré) par rapport à d'autres résines polyesters courantes.

Le premier objet de l'invention concerne une résine polyester hydroxylée et/ou carboxylée, laquelle comprend dans sa structure des unités esters, formées à partir d'un composant polyol a) et d'un composant polyacide b), le composant polyol a) comprenant au moins un polyol a1) choisi parmi les triglycérides d'acide gras hydroxylés et/ou époxydés de formule générale (I) :

$$R\text{-}CO_2\text{-}(H)C\text{-}(CH_2\text{-}CO_2\text{-}R)_2 \qquad (I)$$

avec R étant le radical résidu sans groupement carboxy, d'un acide gras hydroxylé et/ou époxydé $RCO_2H$ avec R comprenant 13 à 21, de préférence 13 à 19 atomes de carbone et au moins un groupement hydroxy et/ou époxy, la résine ayant un indice hydroxy de 10 à 120 mg KOH/g.

La résine comprend des unités formées à partir d'un composant polyol a). En d'autres termes, cela signifie que la résine est obtenue à partir d'une composition comprenant un composant polyol a).

Ledit composant polyol a) selon l'invention peut comprendre à la fois des composés (ou dérivés) polyhydroxylés et/ou époxydés, y compris polyépoxydés. En particulier, les composés époxydés sont classés dans le composant polyol a) dans la mesure ils réagissent comme un composant polyol par rapport à un polyacide par formation de liaisons esters.

Selon une option particulière de ladite résine polyester, ledit triglycéride est choisi parmi les triglycérides de l'acide 9- et/ou 10-hydroxy stéarique, de l'acide 12-hydroxy stéarique, l'acide 14-hydroxy eicosanoïque, de l'acide 12-hydroxy-9-octadécènoïque et/ou sa forme époxydée, de l'acide lesquérolique (acide 14-hydroxy-11-cis-eicosènoïque) et/ou sa forme époxydée ou l'huile de soja époxydée.

Selon une option particulièrement préférée, ledit acide gras hydroxylé est l'acide 12-hydroxy stéarique ou l'acide 12-hydroxy-9-octadécènoïque, ce qui signifie que ledit triglycéride est l'huile de ricin hydrogénée ou l'huile de ricin non hydrogénée, de préférence l'huile de ricin hydrogénée.

Plus particulièrement, le taux en poids dudit triglycéride polyol a1) par rapport au poids de ladite résine varie de 1 à 30%, de préférence de 2 à 25%, plus préférentiellement de 2 à 15%, plus préférentiellement encore 3 à 12%, de manière plus préférentielle 4 à 10%.

Au sens de la présente invention, l'expression « le taux en poids du composant Y par rapport au poids de la résine varie de 1 à 30% » signifie que les unités formées à partir du composant Y représentent 1 à 30% en poids du poids total de la résine. En d'autres termes, cela signifie que la résine est obtenue à partir d'une composition comprenant 1 à 30% en poids de composant Y par rapport au poids de la composition.

Selon un mode de réalisation, ledit polyol a1) représente 5 à 20%, en particulier 10 à 15%, en poids dudit composant polyol a).

Selon une option plus particulière de la résine polyester selon l'invention, ledit composant polyol a) comprend en plus dudit polyol a1) :

a2) au moins un diol en $C_2$ à $C_6$ et porteur d'au moins un substituant latéral méthyle,
en particulier (porteur) de deux substituants latéraux en $C_1$-$C_4$, de préférence ledit diol étant en $C_2$ à $C_4$.

Plus particulièrement, le taux en poids du diol a2) par rapport au poids de ladite résine varie de 0 à 50%, de préférence de 20 à 40%, plus préférentiellement de 25 à 35%.

Selon un mode de réalisation, ledit polyol a2) représente 50 à 80%, en particulier 60 à 75%, en poids dudit composant polyol a).

Selon une option plus spécifique de ladite résine, ledit composant polyol a) comprend en plus :
a3) au moins un diol linéaire aliphatique en $C_2$ à $C_6$, sans aucun substituant alkyle latéral et/ou un diol cycloaliphatique en $C_6$ à $C_{10}$ et/ou un diol gras en $C_{32}$ à $C_{36}$, en particulier dérivé d'un diacide dimère d'acide gras en $C_{32}$ à $C_{36}$.

Plus particulièrement, le taux en poids du diol a3) par rapport au poids de ladite résine varie de 0 à 20%, de préférence de 2 à 15%, plus préférentiellement de 5 à 10%.

Selon un mode de réalisation, ledit polyol a3) représente 10 à 30%, en particulier 15 à 25%, en poids dudit composant polyol a).

Selon un mode de réalisation particulier, le composant polyol a) comprend le polyol a1), le diol a2) et le diol a3).

Le composant polyol a) peut notamment représenter 20 à 60%, en particulier 30 à 50%, plus particulièrement 35 à 45%, en poids du poids de la résine.

Encore plus particulièrement dans ladite résine, ledit composant polyol a) comprend en plus :

a4) au moins un polyol de fonctionnalité > 2 et de préférence de fonctionnalité de 3 ou 4, plus préférentiellement de 3, et que (dans ce cas) ladite résine a une structure ramifiée.

Une structure ramifiée (aussi appelée branchée) signifie que la structure de la chaîne de ladite résine comprend des segments polyesters latéraux, liés à la fonctionnalité supérieure à 2 du polyol a4).

Ledit polyol triglycéride a1) peut être un triglycéride qui résulte de l'hydrogénation de l'huile hydroxylée insaturée correspondante : le triglycéride de l'acide 12-hydroxy stéarique de l'hydrogénation de l'huile de ricin (triglycéride d'acide ricinoléïque), le triglycéride de l'acide 14-hydroxy eicosanoïque de l'hydrogénation du triglycéride de l'acide 14-hydroxy 11 cis-eicosènoique (triglycéride de l'acide lesquérolique).

Comme composants a2) convenables, on peut citer : méthyl éthylène glycol, méthyl propane diol, néopentyl glycol (2,2-diméthyl 1,3-propanediol), le diméthyl butane diol, 2-butyl-2-éthyl-1,3-propane diol, et de préférence le néopentyl glycol ou le 2-butyl, 2-éthyl 1,3-propane diol.

Comme composants a3) diols linéaires aliphatiques convenables, on peut citer l'éthylène glycol, diéthylène glycol, propylène glycol, dipropylène glycol, butane diol, pentane diol ou l'hexanediol, de préférence l'éthylène glycol et l'hexanediol. Comme diol cycloaliphatique a3), on peut citer le cyclohexane diol ou le cyclohexane diméthanol. Comme diol gras a3), on peut citer les diols gras dérivés des dimères d'acides gras en $C_{32}$ à $C_{36}$, avec ledit diol gras pouvant être hydrogéné ou non hydrogéné. Par exemple, lesdits diols gras en $C_{32}$ à $C_{36}$ peuvent être obtenus par réduction des groupements carboxy de dimères d'acides gras en $C_{32}$ à $C_{36}$, plus particulièrement par hydrogénation catalytique desdits dimères d'acides gras avec remplacement des groupements carboxy par des groupements hydroxy (forme réduite des groupements carboxy).

Comme composants a4) convenables, on peut citer : le glycérol et le triméthylol propane.

La résine selon l'invention comprend dans sa structure des unités esters, formées à partir d'un composant polyol a) et d'un composant polyacide b). En d'autres termes, cela signifie que la résine est obtenue à partir d'une composition comprenant un composant polyol a) et un composant polyacide b).

Le composant polyacide b) peut notamment comprendre des diacides, des dérivés de diacides ou des anhydrides.

Encore plus particulièrement, ladite résine selon l'invention a un composant polyacide b) qui comprend :

b1) au moins un diacide aromatique ou son anhydride, de préférence représentant de 20 à 75% en poids de ladite résine,
b2) en option, au moins un diacide aliphatique linéaire, en $C_4$ à $C_{10}$, de préférence de $C_4$ à $C_8$, ou son anhydride et/ou au moins un diacide dimère d'acide gras en $C_{32}$ à $C_{36}$,
b3) en option, au moins un diacide cycloaliphatique ou son anhydride.

Les diacides b1), b2) et b3) peuvent être des dérivés de diacide. Au sens de la présente invention un dérivé de diacide est un composé qui peut être transformé en diacide par hydrolyse ou transestérification. Les dérivés de diacide incluent les formes partiellement ou totalement estérifiées des diacides définis ci-dessus, notamment les mono- et diesters d'alkyles en C1-C6 des diacides définis ci-dessus.

Le composant polyacide b) peut notamment représenter 40 à 80%, en particulier 50 à 70%, plus particulièrement 55 à 65%, en poids du poids de la résine.

Selon une composition particulière de ladite résine, le composant polyacide b) consiste essentiellement en le diacide b1) ou son anhydride.

Selon une composition particulière de ladite résine, le composant polyacide b) de ladite résine comprend (en plus des diacides b1) et b2)) au moins un diacide carboxylique cycloaliphatique b3) ou son anhydride.

Selon un mode de réalisation, le taux en poids de b1) par rapport au poids de ladite résine varie de 20 à 75%, en particulier de 50 à 70%, plus particulièrement de 55 à 65%.

Comme diacide aromatique b1) ou son anhydride, on peut citer l'acide isophtalique, l'acide téréphtalique, l'anhydride phtalique.

Comme diacide aliphatique linéaire b2) ou son anhydride, on peut citer l'acide malonique, l'acide adipique, l'acide succinique, l'acide azélaïque ou l'acide sébacique et comme diacide dimère d'acide gras en $C_{32}$ à $C_{36}$, un dimère d'acide gras dérivé de l'huile de tall ou de l'huile de colza, hydrogéné ou non hydrogéné et l'anhydride succinique.

Comme diacide cycloaliphatique b3) ou son anhydride, on peut citer le cyclohexane dicarboxylique acide, l'acide hexahydrophtalique et l'anhydride hexahydrophtalique.

Un « diol en $C_n$ substitué » signifie qu'il a n atomes de carbone enchaînés (liés entre eux en chaîne) hormis les substituants latéraux qui ne sont pas comptés dans ledit nombre n. Par « Cn », on entend la longueur de la chaine carbonée (-C-C-) portant les 2 groupements hydroxy, les substituant étant portés par ces mêmes n atomes.

Le terme « polyacide en Cn » signifie que ledit polyacide a n carbones y compris les carbones des groupements carboxy (-CO2H).

Ledit diol a2) est de préférence sélectionné parmi : néopentyl glycol (2,2-diméthyl-1,3-propanediol) ou le 2-butyl-2-éthyl-1,3-propanediol et en particulier le néopentyl glycol.

De préférence, ledit polyol a2) représente moins de 75% en poids dudit composant polyol a).

La résine a un indice hydroxy de 10 à 120 mg KOH/g. Selon un mode de réalisation particulier, la résine a un indice hydroxy de 15 à 100, de 20 à 80, de 25 à 75, de 30 à 60 ou de 35 à 50 mg KOH/g.

Selon un mode de réalisation particulier, la résine a un indice carboxy inférieur ou égal à 20, inférieur ou égal à 15, inférieur ou égal à 10, inférieur ou égal à 7 ou inférieur ou égal à 5 mg KOH/g. L'indice carboxy peut notamment aller de 0 à 20, de 0,1 à 15, de 0,5 à 10, de 1 à 7 mg, de 2 à 5 mg KOH/g.

De préférence, ladite résine a un indice hydroxy ou un indice carboxy ou un indice global hydroxy + carboxy allant de 5 à 200, de préférence de 10 à 175 mg KOH/g.

Ladite résine selon l'invention a en particulier une température de transition vitreuse mesurée par DSC à 10°C/min, en deux passages, de -10°C à 100°C, de préférence de -10 à 50°C et plus préférentiellement de 0°C à 40°C.

Selon une option particulièrement préférée de ladite résine, au moins 50%, de préférence au moins 75% en poids de ladite résine est biosourcée.

Plus particulièrement, ladite résine selon l'invention est hydroxylée.

Selon une option plus particulière, ladite résine a une masse moléculaire moyenne en nombre Mn (calculée, en particulier à partir des indices OH et acide et du bilan matière comme expliqué plus loin avant la partie expérimentale) allant de 500 à 20000, de préférence de 750 à 10000.

Selon une option particulière, les deux composants a3) et a4) sont présents comme composants essentiels avec les autres composants a1) et a2) comme définis ci-haut.

Ladite résine polyester peut être préparée par réaction de polycondensation des composants polyol et polyacide pré mélangés et chauffés à l'état fondu en masse en une seule étape avec élimination de l'eau éliminée soit sous vide soit en présence d'un solvant formant un azéotrope avec l'eau éliminée, tel que le xylène. Un tel procédé est déjà décrit dans la description et exemples de WO2016/203136. Ladite résine peut être préparée par réaction de polycondensation entre le composant polyol a) et le composant polyacide b) tels que définis ci-haut. La réaction peut avoir lieu en milieu solvant ou à l'état fondu en masse, comme déjà connu de l'homme du métier. Lorsque la réaction est conduite en présence d'un solvant comme entraineur azéotropique pour éliminer l'eau, le solvant choisi préférentiellement est le xylène.

La réaction est conduite avantageusement en présence d'un catalyseur. Comme catalyseur, on peut utiliser les titanates d'alkyle comme, par exemple, le titanate d'isopropyle, le titanate de butyle, le titanate de 2-éthylhexyle ou les dérivés de l'étain comme, par exemple, l'oxyde d'étain, l'oxalate d'étain, l'oxyde de monobutyl étain. Les quantités de catalyseur utilisées sont comprises entre 100 et 5000 ppm par rapport à l'ensemble des monomères et de préférence de 500 à 1500 ppm toujours par rapport à l'ensemble des monomères.

Un deuxième objet de l'invention concerne une solution de résine dans un solvant organique, laquelle solution comprend en plus dudit solvant, au moins une résine telle que définie ci-avant selon l'invention.

En particulier, concernant ladite solution, le taux en poids de ladite résine par rapport au poids total résine + solvant est d'au moins 50%, en particulier d'au moins 60% et varie de préférence de 60 à 90%, plus préférentiellement de 65 à 90% et encore plus préférentiellement de 65 à 85%.

Comme solvant organique convenable pour préparer ladite solution de résine, ledit solvant peut être sélectionné parmi les esters méthyliques ou esters éthyliques d'acides monocarboxyliques en $C_2$ à $C_4$ ou esters desdits acides monocarboxyliques avec des monoéthers méthoxy ou éthoxy de diols en $C_2$ à $C_4$, en particulier l'acétate de méthoxy propyle ou parmi diesters méthyliques ou éthyliques de diacides carboxyliques en $C_4$ à $C_6$, terpènes, polyhydroxyalcanoates, esters méthyliques ou éthyliques d'huiles d'acides gras ou esters d'acide lactique avec alcools en $C_4$ à $C_8$, solvants aromatiques comme le xylène ou d'autres solvants aromatiques qui sont des coupes de distillation d'hydrocarbures comportant 9 atomes de carbone avec point d'ébullition (Eb) allant de 155 à 180°C de type Solvarex® 9 ou coupes de distillation d'hydrocarbures aromatiques comportant 10 atomes de carbone de point Eb allant de 180 à 193°C de type Solvesso® 150 ND, éventuellement en mélange avec les monoéthers de glycol comme le butyl glycol (ou butoxyéthanol).

De préférence, ledit solvant est sélectionné parmi les solvants aromatiques, tels que définis ci-haut, seuls ou en mélange avec les monoéthers de glycol, comme par exemple le mélange d'une coupe de distillation en $C_9$ de point Eb allant de 155 à 180°C comme le Solvarex® 9 avec le butylglycol. Ledit solvant peut être le solvant de préparation de ladite résine si préparée par polycondensation en milieu solvant ou un solvant de dissolution après préparation par polycondensation en masse. Le taux de solides peut être ajusté par addition supplémentaire de solvant si la résine est préparée au départ dans un solvant. Ledit solvant peut être un mélange d'au moins deux solvants parmi ceux cités ci-haut.

Un autre objet de l'invention concerne une composition de revêtement, de préférence en milieu solvant organique, plus particulièrement composition réticulable, comprenant au moins une résine telle que définie ci-haut selon l'invention ou une solution de résine telle que définie ci-avant.

Plus particulièrement, la composition de revêtement selon l'invention est réticulable et comprend en plus de ladite résine au moins un agent réticulant, porteur de groupements réactifs avec les groupements réactifs de ladite résine.

Ledit agent réticulant de préférence est sélectionné parmi la mélamine, la benzoguanamine ou un polyisocyanate, y compris et en particulier polyisocyanate bloqué ou un polyanhydride ou un polysilane, en particulier polysilane bloqué par alcoxy quand ladite résine est hydroxylée ou ledit agent réticulant est sélectionné parmi les polyépoxydes ou polyols quand ladite résine est carboxylée.

La composition selon l'invention est en particulier une composition de revêtement en milieu solvant organique. Plus particulièrement, il s'agit d'une composition de peinture ou de vernis et encore plus particulièrement d'une composition de peinture ou de vernis pour surfaces métalliques.

Cette composition de revêtement peut s'appliquer pour :

- les revêtements de finition (sur primaire) ou monocouche (direct sur métal),
- les revêtements primaires,
- les revêtements d'envers de bande (en anglais « backer). Il s'agit de revêtements de la partie interne de la feuille métallique non exposée aux intempéries et à la lumière.

Selon une option particulière préférée, ladite composition comprend en plus de ladite résine et du dit agent réticulant au moins un pigment.

Un autre objet de l'invention concerne l'utilisation d'une résine ou d'une solution de résine comme définies selon l'invention, dans des compositions de revêtements réticulables en milieu solvant organique. Plus particulièrement, selon une première option, il s'agit de compositions de revêtements à comportement « monocomposant » pour métal, en particulier pour revêtement sur feuille métallique (« coil coating ») ou pour emballage métallique (« packaging coatings »). Selon une deuxième option alternative, il s'agit de revêtements « bicomposants ».

Ladite utilisation selon l'invention peut également concerner des revêtements en poudre, en particulier pour métal.

De préférence dans ladite utilisation selon l'invention, ledit revêtement est pigmenté et ladite utilisation est pour des revêtements ayant un pouvoir de rendement élevé (haut) pour revêtement de protection anticorrosion.

Finalement, l'invention concerne un revêtement lequel résulte de l'utilisation d'au moins une résine ou d'une solution de résine ou d'une composition de revêtement telles que définies ci-haut selon l'invention. Plus particulièrement, ledit revêtement est un revêtement de feuille métallique (« coil coating ») ou revêtement de protection, en particulier anticorrosion métal. Encore plus particulièrement, il peut s'agir de revêtement primaire, de finition, monocouche ou d'envers de bande.

La mesure de l'indice OH est réalisée selon la méthode ISO 2554 et celle de l'indice d'acide selon la méthode ISO 2114.

La valeur de Mn est calculée à partir de l'indice d'hydroxyle et de l'indice d'acide mesurés qui permettent de calculer une masse équivalente $M_{eq}$ par fonction (OH ou carboxy ou somme des deux si les deux présentes) et de la fonctionnalité moyenne en nombre de la résine, cette fonctionnalité moyenne $f_m$ étant calculée à partir de :

$$f_m = \Sigma_i x_i * f_i / \Sigma_i x_i$$

avec $x_i$ étant le nombre de moles du composant i (acide ou alcool) et $f_i$ étant la fonctionnalité dudit composant i la masse équivalente $M_{eq}$ est définie par

$$M_{eq} = 56000/(I_{OH}+I_{acide})$$

Ainsi

$$M_{n\ calculée} = M_{eq} * f_m$$

Les exemples suivants sont exposes ci-apres à titre d'illustration de l'invention et de ses performances et ne limitent nullement la portée de l'invention.

**Partie expérimentale**

1) Préparation de la résine pour revêtement primaire

1.1) Tableau des matières premières utilisées (voir tableau 1)

[Tableau 1]

| Matière première | Nom chimique | Fournisseur | Fonction technique | Nature de la fonctionnalité chimique | Composant selon l'invention |
|---|---|---|---|---|---|
| PAN | Anhydride phtalique | Polynt | Monomère | Carboxy/2 | Diacide b1 |
| ISO | Acide isophtalique | Penpet | Monomère | Carboxy/2 | Diacide b1 |
| EG | Ethylène glycol | Dow | Monomère | Hydroxy/2 | Diol a3 |
| NPG | Néopentyl glycol | Perstorp | Monomère | Hydroxy/2 | Diol a2 |

(suite)

| Matière première | Nom chimique | Fournisseur | Fonction technique | Nature de la fonctionnalité chimique | Composant selon l'invention |
|---|---|---|---|---|---|
| HRH | Huile de ricin hydrogénée | Jayant | Monomère | Hydroxy/3 | Triglycéride polyol a1 |
| Solvarex® 9 | Solvant aromatique | Total | Solvant de la résine | | Solvant de la résine |
| Fascat® 4100 | Oxyde de mo-nobutyl étain | PMC Organo-metallix | Catalyseur | | Catalyseur |
| Xylène | Xylène | Total | Solvant entraineur azéotropique | | Solvant azéotropique |

1.2) <u>Mode opératoire de préparation de la résine</u> : selon l'invention (exemple 1) et essai comparatif 1, sans HRH (voir tableau 2 pour les proportions)

Dans un réacteur de 1,5 l en verre équipé de :

- une colonne à distiller du type Vigreux surmontée d'un séparateur Dean Stark,

- une canne plongeante pour introduire l'azote,

- une sonde de température,

on charge les monomères en quantité telles que décrites dans le tableau 2 ci-dessous.

La synthèse a lieu à 220°C maxi en présence d'un catalyseur (Fascat® 4100 : 0,08 g) et de xylène comme entraineur azéotropique (30 g) pour éliminer l'eau de la réaction.

La résine selon l'invention et selon l'exemple comparatif est diluée dans du Solvarex® 9 (en complément pour avoir l'extrait sec présenté au tableau 2).

Les caractéristiques des deux résines sont données dans le tableau 2.

Compositions et caractéristiques des résines (hors solvant, catalyseur et entraineur azéotropique) selon l'invention (exemple 1) et essai comparatif 1

[Tableau 2]

| | Essai comparatif 1 | Essai selon l'invention (exemple 1) |
|---|---|---|
| Anhydride phtalique | 203 | 184 |
| Acide isophtalique | 440 | 398 |
| Ethylène glycol | 150 | 69 |
| Néopentyl glycol | 207 | 299 |
| HRH | 0 | 50 |
| TOTAL | 1000 | 1000 |
| Indice d'hydroxy résine (mg KOH/g) (Méthode ISO 2554) | 42 | 45 |
| Indice d'acide résine (mg KOH / g) (Méthode ISO 2114) | 3,1 | 3,5 |
| Extrait sec (%) (Méthode ISO 3251) | 64,7 | 64,5 |
| Viscosité Brookfield à 25°C (mPa.s) (Méthode ISO 3219) à l'extrait sec indiqué | 11200 | 4000 |

2) <u>Préparation de la résine pour revêtement de finition (« top coat »)</u>

2.1) <u>Tableau des matières premières utilisées</u> (voir tableau 3)

Matières premières utilisées vs résine pour revêtement de finition

[Tableau 3]

| Matière première | Nom chimique | Fournisseur | Fonction technique | Nature de la fonctionnalité chimique | Composition type selon l'invention |
|---|---|---|---|---|---|
| PAN | Anhydride phtalique | Polynt | Monomère | Carboxy/2 | Diacide b1 |
| AA | Acide adipique | BASF | Monomère | Carboxy/2 | Diacide b2 |
| EG | Ethylène glycol | Dow | Monomère | Hydroxy/2 | Diol a3 |
| NPG | Néopentyl glycol | Perstorp | Monomère | Hydroxy/2 | Diol a2 |
| TMP | Trimethylol propane | Lanxess | Monomère | Hydroxy/3 | Diol a4 |
| HRH | Huile de riçin hydrogéné | Jayant | Monomère | Hydroxy/3 | Triglycéride polyol a1 |
| Solvarex® 9 | Solvant aromatique | Total | Solvant de la ré-sine | | Solvant de la ré-sine |
| Fascat® 4100 | Oxyde de mo-nobutyl étain | PMC Organo-metallix | Catalyseur | | Catalyseur |
| Xylène | Xylène | Total | Solvant entrai-neur azéotro-pique | | Solvant entraineur azéotropique |

2.2) <u>Mode opératoire de préparation de la résine</u> : selon l'invention (exemple 2) et essai comparatif 2 sans HRH

Le mode opératoire utilisé est identique à celui décrit au point 1.2) (les quantités sont données dans le tableau 4).
La résine selon l'invention et selon l'exemple comparatif est diluée dans du Solvarex® 9 pur.
Les caractéristiques des 2 résines sont également données dans le tableau 4.

Compositions et caractéristiques des résines (hors solvant, catalyseur et entraineur azéotropique) selon l'invention (exemple 2) et essai comparatif 2

[Tableau 4]

| Composant/caractéristiques résine | Essai comparatif 2 | Essai selon l'invention (exemple 2) |
|---|---|---|
| Anhydride phtalique | 450 | 570 |
| Acide adipique | 140 | 0 |
| Ethylène glycol | 70 | 95 |
| Néopentyl glycol | 300 | 280 |
| HRH | | 55 |
| Triméthylol propane | 40 | 0 |
| TOTAL | 1000 | 1000 |

(suite)

| Composant/caractéristiques résine | Essai comparatif 2 | Essai selon l'invention (exemple 2) |
|---|---|---|
| Indice d'hydroxy résine (mg KOH/g) (Méthode ISO 2554) | 45 | 35 |
| Indice d'acide résine (mg KOH / g) (Méthode ISO 2114) | 3,3 | 2,7 |
| Extrait sec (%) (Méthode ISO 3251) | 75,4 | 76 |
| Viscosité Brookfield à 25°C (mPa.s) (Méthode ISO 3219) à l'extrait sec indiqué | 18000 | 16000 |

3) Application des résines dans des peintures pour feuille métallique

3.1) Feuille métallique et conditions d'application du revêtement/conditionnement avant tests

La tôle utilisée pour les essais est une tôle en acier galvanisée de 0,5 millimètre d'épaisseur prétraitée avec une solution de chromate.

La peinture est appliquée à l'aide d'un applicateur type Bar Coater. Deux types d'application sont réalisés :

- revêtement primaire,

- revêtement de finition (« top coat »),

Dans le cas du revêtement primaire (« primer »), la peinture est appliquée sur une tôle métallique nue de telle façon à obtenir un film de 5 μm d'épaisseur sèche.

Dans le cas du revêtement de finition (« top coat »), la peinture est appliquée sur une tôle métallique enduite d'un revêtement primaire de 5 μm d'épaisseur sèche et de telle façon à obtenir une couche de finition de 18 μm d'épaisseur sèche.

La tôle ainsi revêtue est introduite dans un four ventilé.

Conditions de réticulation

[Tableau 5]

| Type revêtement | T (°C) du four | Pic de T (°C) du métal / temps pour l'atteindre (s) |
|---|---|---|
| Primaire | 385 | 232/45 |
| Top Coat | 385 | 232/50 |

Le revêtement primaire (« primer »), en tant que revêtement primaire et d'envers de bande sur le métal, est évalué grâce aux tests de performances mentionnés dans le tableau 6, après conditionnement des panneaux d'essais dans une salle climatisée à 23°C ± 2° où l'humidité est contrôlée à 50% ± 5%.

Le revêtement de finition (« top coat ») est appliqué sur le revêtement primaire et le système primaire plus couche de finition est évalué grâce aux tests de performances mentionnés dans le tableau 6, après conditionnement des panneaux d'essais dans une salle climatisée à 23°C ± 2° où l'humidité est contrôlée à 50% ± 5%.

Tests de performances des revêtements

[Tableau 6]

| Tests des performances | Méthode utilisée |
|---|---|
| Résistance à la méthyl éthyl cétone (s) ou à la méthyl isobutyl cétone (s) | Méthode visuelle* |
| Charge 1 Kg (MEK) ou 500 g (MIBK)/TABER linéaire* | |

(suite)

| Tests des performances | Méthode utilisée |
|---|---|
| Test d'emboutissage (mm) | NF EN ISO 1520 |
| Test d'adhérence | NF EN ISO 2409 |
| Adhérence + embouti 8 mm | NF EN 13523-6 |
| Adhérence + embouti 8 mm + 30 min à 90°C | NF EN 13523-6 |
| Test de pliage en T | NF EN 13523-7 |
| Dureté PERSOZ (s) | NF EN ISO 1522 |
| Condensation Tester (Q CT) avec eau à 40°C | ISO 6270 |
| Rendement (m$^2$/Kg/$\mu$m)** | |
| Gain de rendement (%)*** | |

*Cette méthode consiste à faire des aller et retour sur la tôle avec un dispositif (Abrasimètre TABER) imbibé de solvant et noter le temps à partir duquel on observe une dégradation du revêtement

** Rendement = surface en m$^2$ de métal recouvrable avec 1 kg de peinture ayant 1 $\mu$m d'épaisseur sèche.

Le rendement est calculé selon la formule suivante à partir de la densité sèche de peinture, de l'extrait sec et de l'épaisseur de couche :

$$\text{Rendement} = (1kg \cdot \text{Extrait Sec\%}) / (\text{Masse Volumique Sèche kg/m}^3)/10^{-9}m$$

***Le gain en rendement est le pourcentage excédentaire de rendement par rapport à une résine standard (% d'amélioration du rendement).

3.2) Formulation et préparation d'une peinture pour revêtement primaire (voir tableau 7)

Formulation de la peinture primaire

[Tableau 7]

| Composant | Quantité poids | Référence composant | Fonction | Fournisseur | Nom chimique |
|---|---|---|---|---|---|
| Résine dans solvant (invention exemple 1 ou comparatif 1) | 265 | (1) | Liant testé | voir tab 2 - | Polyester |
| Solvarex® 9 | 30 | (2) | Solvant | Total | Hydrocarbure aromatique |
| BUTYLDIGLYCOL | 30 | (3) | Solvant | Brenntag | Ether alcool |
| DISPERBYK® 161 | 9 | (4) | Agent dispersant | BYK | Polymère bloc |
| KRONOS® 2360 | 83,1 | (5) | Pigment | KRONOS | Oxyde de titane |
| SHIELDEX® C 303 | 50,3 | (6) | Pigment anticorrosif | GRACE | Silice |
| HEUCOPHOS® SRPP | 50,3 | (7) | Pigment anticorrosif | | |
| Aerosil® R 972 | 6,5 | (8) | Additif rhéologique | EVONIK | Silice |

(suite)

| Composant | Quantité poids | Référence composant | Fonction | Fournisseur | Nom chimique |
|---|---|---|---|---|---|
| Résine dans solvant (invention exemple 1 et comparatif 1) | 264 | (9) | Liant testé | voir tab 2 - | Polyester |
| CYMEL® 303 LF | 48 | (10) | Réticulant | ALLNEX | Mélamine |
| APTS (10% butanol w / w ) | 5,8 | (11) | Catalyseur | BASF | Acide paratoluène sulfonique |
| EPIKOTE 828 | 10,1 | (12) | Liant | Dow | Résine époxy |
| Solvarex® 9 | 73,95 | (13) | Solvant | Total | Hydrocarbure aromatique |
| BUTYLDIGLYCOL | 73,95 | (14) | Solvant | Brenntag | Ether alcool |
| Total | 1000 | | | | |

Dans un bécher de 1 litre thermostaté à température ambiante, on introduit dans cet ordre, les composants (1), (2), (3), (4), (5), (6), (7), (8). Ce mélange est mis sous agitation à l'aide d'un agitateur type Dispermat® puis dispersé 30 minutes à 3500 tours/minutes en présence de billes en verre pour faciliter la dispersion des pigments.

Sous agitation à 1000 tours/minute, on ajoute le reste du liant (9), les composants (10), (11) et (12).

Toujours sous agitation à 1000 tours/minutes, la viscosité de la peinture est ajustée grâce à l'ajout des composants (13) et (14) en quantité suffisante pour obtenir une viscosité comprise entre 300 mPa.s et 350 mPa.s à 25°C.

La peinture primaire ainsi obtenue est filtrée par tamisage avec élimination des billes de verre.

La peinture primaire obtenue présente les caractéristiques suivantes (cf tableau 8).

Caractéristiques de la peinture primaire

[Tableau 8]

| Caractéristique | Valeur |
|---|---|
| Masse Volumique sèche (g/cm$^3$) | 1,45 |
| % Solides (en poids) | 57 (comparatif 1) 62,8 (invention exemple 1) |
| CPV* (%) | 16 |
| Viscosité Cône-plan à 25°C (m.Pas) | 360 (comparatif 1) 350 (invention exemple 1) |
| * CPV : Concentration Pigmentaire Volumique | |

3.2.1) Résultats applicatifs et performances (tableau 9)

[Tableau 9]

| Propriété mécanique | Comparatif 1 | Invention exemple1 |
|---|---|---|
| Résistance à la méthyl isobutyl cétone (s) Charge 500 g/TABER linéaire | < 10 | < 10 |
| Test d'adhérence | 0 | 0 |
| Adhérence + embouti 8 mm | 0 | 0 |
| Adhérence + embouti 8 mm + 30 min à 90°C | 0 | 0 |

(suite)

| Propriété mécanique | Comparatif 1 | Invention exemple1 |
|---|---|---|
| Test de pliage en T | 1,5T | 1T |
| Dureté PERSOZ (s) | 320 | 325 |
| Condensation Tester (Q CT) avec eau à 40°C -500 h | 2S2 | 1S2 |
| Rendement (m$^2$/kg/$\mu$m) | 393 | 433 |
| Gain de rendement (%) | - | 10,1 |

3.3) Formulation et préparation d'une peinture pour revêtement finition « top coat » (tableau 10)

Liste des ingrédients pour un liant d'extrait sec testé ajusté à un extrait sec de 70% (avec solvants respectifs décrits ci-haut, respectivement pour résines selon invention exemple 2 et comparatif 2)

[Tableau 10]

| Composant | Quantité poids | Référence composant | Fonction | Fournisseur | Nom chimique |
|---|---|---|---|---|---|
| Résine invention exemple 2 ou comparatif 2 (extrait sec 70%) | 226 | (1) | Liant testé | voir tab.4. | Polyester |
| Solvarex® 10 LN | 30 | (2) | Solvant | Total | Hydrocarbure aromatique |
| BUTYLDIGLYCOL | 30 | (3) | Solvant | Brenntag | Ether alcool |
| DISPERBYK® 161 | 7,9 | (4) | Agent dispersant | BYK | Polymère bloc |
| KRONOS® 2360 | 310 | (5) | Pigment | KRONOS | Oxyde de titane |
| Syloid® ED 40 | 26,8 | (6) | Charge | GRACE | Silice |
| Aerosil® R 972 | 3,2 | (7) | Additif rhéologique | EVONIK | Silice |
| Résine (extrait sec 70%) | 174 | (8) | Liant | voir tab 4 | Polyester |
| CYMEL® 303 LF | 54,6 | (9) | Réticulant | ALLNEX | Mélamine |
| APTS (10% butanol w / w ) | 11,1 | (10) | Catalyseur | BASF | Acide paratoluène sulfonique |
| Crayvallac® FLow 200 | 3 | (11) | Agent d'étalement | Arkema | Polyester |
| Butyldiglycol | 61,7 | 12) | Solvant | Brenntag | Ether alcool |
| Solvarex® 10 LN | 61,7 | (13) | Solvant | Total | Hydrocarbure aromatique |
| Total | 1000 | | | | |

Dans un bécher de 1 litre thermostaté à température ambiante, on introduit dans cet ordre, les composants (1), (2), (3), (4), (5), (6), (7). Ce mélange est mis sous agitation à l'aide d'un agitateur type Dispermat puis dispersé 40 minutes à 3500 tours/minutes. On ajoute ensuite le reste du liant (8) et le composé (9). La dispersion est poursuivie 15 minutes à 2500 tours/minutes. Toujours sous agitation à 1000 tours/minutes, on ajoute les composants (10), (11), la viscosité de la peinture est ajustée entre 500 et 550 mPa.s grâce à l'ajout de composants solvants (12) et (13).

Le revêtement de finition « top coat » est évalué sur une tôle mécanique préalablement revêtue d'un revêtement primaire décrit en 4.2).

Le revêtement de finition « top coat » (semi-brillant) présente les caractéristiques suivantes (cf tableau 11).

Caractéristiques du revêtement de finition (« top coat »)

[Tableau 11]

| Masse Volumique sèche (g/cm$^3$) | CPV* (%) | Extrait sec (%) | | Viscosité Cône-plan à 25°C (m.Pas) | |
|---|---|---|---|---|---|
| | | Comparatif 2 | Invention exemple 2 | Comparatif 2 | Invention exemple 2 |
| 1,75 | 23 | 63,5 | 71 | 510 | 500 |
| * CPV : Concentration Pigmentaire Volumique | | | | | |

3.3.1) Résultats applicatifs et performances (tableau 12)

[Tableau 12]

| Caractéristique / Test | Valeur | |
|---|---|---|
| | Comparatif 2 | Invention exemple 2 |
| Résistance à la méthyl éthyl cétone (s) Charge 1Kg / TABER linéaire | > 100 | > 100 |
| Test d'emboutissage (mm) | 0 | 0 |
| Test d'adhérence | 0 | 0 |
| Adhérence + embouti 8 mm | 2 | 0 |
| Adhérence + embouti 8 mm + 30 min à 90°C | 3 | 0 |
| Test de pliage en T | 2T | 2T |
| Dureté PERSOZ (s) | 240 | 243 |
| Condensation Tester (Q CT) avec eau à 40°C -500h | 2S2 | 1S2 |
| Rendement (m$^2$/kg/$\mu$m)) | 362 | 406 |
| Gain de rendement (%) | 0 | 12,1 |

## Revendications

**1.** Résine polyester hydroxylée et/ou carboxylée, **caractérisée en ce qu'**elle comprend dans sa structure des unités esters formées à partir d'un composant polyol a) et d'un composant polyacide b), le composant polyol a) comprenant au moins un polyol a1) choisi parmi les triglycérides d'acides gras

$$R\text{-}CO_2\text{-}(H)C\text{-}(CH_2\text{-}CO_2\text{-}R)_2 \qquad (I)$$

avec R étant le radical résidu sans groupement carboxy, d'un acide gras hydroxylé et/ou époxydé $RCO_2H$ avec R comprenant 13 à 21, de préférence de 13 à 19 atomes de carbone et au moins un groupement hydroxy et/ou époxy,
la résine ayant un indice hydroxy de 10 à 120 mg KOH/g, mesurée selon la méthode indiquée dans la description.

**2.** Résine polyester selon la revendication 1, **caractérisée en ce que** ledit triglycéride est choisi parmi les triglycérides de l'acide 9- et/ou 10-hydroxy stéarique, de l'acide 12-hydroxy stéarique, de l'acide 14-hydroxy eicosanoïque, de l'acide 12-hydroxy-9-octadécènoïque et/ou sa forme époxydée, de l'acide lesquérolique (14-hydroxy-11-cis-eicosènoïque) et/ou sa forme époxydée ou l'huile de soja époxydée.

**3.** Résine polyester selon la revendications 1 ou 2, **caractérisée en ce que** le taux en poids dudit triglycéride polyol a1) par rapport au poids de ladite résine varie de 1 à 30%, de préférence de 2 à 25%, plus préférentiellement de 2 à 15%, plus préférentiellement de 3 à 12%, de manière plus préférentielle 4 à 10%.

**4.** Résine selon l'une des revendications 1 à 3, **caractérisée en ce qu'**elle a un composant polyacide b) qui comprend :

b1) au moins un diacide aromatique ou son anhydride, de préférence représentant de 20 à 75% en poids de ladite résine

b2) en option, au moins un diacide aliphatique linéaire, en $C_4$ à $C_{10}$, de préférence de $C_4$ à $C_8$ et/ou un diacide dimère d'acide gras en $C_{32}$ à $C_{36}$,

b3) en option, au moins un diacide cycloaliphatique.

**5.** Résine selon l'une des revendications 1 à 4, **caractérisée en ce que** ladite résine a un indice hydroxy de 15 à 100, de 20 à 80, de 25 à 75, de 30 à 60 ou de 35 à 50 mg KOH/g.

**6.** Résine selon l'une des revendications 1 à 5, **caractérisée en ce que** ladite résine a un indice carboxy inférieur ou égal à 20, inférieur ou égal à 15, inférieur ou égal à 10, inférieur ou égal à 7 ou inférieur ou égal à 5 mg KOH/g.

**7.** Résine selon l'une des revendications 1 à 6, **caractérisée en ce qu'**elle a une température de transition vitreuse mesurée par DSC à 10°C/min, de -10°C à 100, de préférence de -10 à 50°C et plus préférentiellement de 0°C à 40°C.

**8.** Résine selon l'une des revendications 1 à 7, **caractérisée en ce qu'**au moins 50%, de préférence au moins 75% en poids de ladite résine est biosourcée.

**9.** Résine selon l'une des revendications 1 à 8, **caractérisée en ce qu'**elle a une masse moléculaire moyenne en nombre Mn, calculée selon la méthode indiquée dans la description, allant de 500 à 20000, de préférence de 750 à 10000.

**10.** Solution de résine dans un solvant organique, **caractérisée en ce qu'**elle comprend en plus dudit solvant, au moins une résine telle que définie selon l'une des revendications 1 à 9.

**11.** Composition de revêtement, de préférence en milieu solvant organique, de préférence composition réticulable, comprenant au moins une résine telle que définie selon l'une des revendications 1 à 9 ou une solution de résine telle que définie selon la revendication 10.

**12.** Composition selon la revendication 11, **caractérisée en ce qu'**elle est réticulable et comprend en plus de ladite résine au moins un agent réticulant, porteur de groupements réactifs avec les groupements réactifs de ladite résine.

**13.** Utilisation d'une résine telle que définie selon l'une des revendications 1 à 9 ou d'une solution de résine telle que définie selon la revendication 10 dans des compositions de revêtements réticulables en milieu solvant organique.

**14.** Utilisation selon la revendication 13, **caractérisée en ce qu'**il s'agit de compositions de revêtements à comportement « monocomposant » pour métal, en particulier pour revêtement sur feuille métallique (« coil coating ») et revêtement interne ou externe d'emballage métallique (« packaging coating »).

**15.** Utilisation selon la revendication 13, **caractérisée en ce qu'**il s'agit de revêtements « bicomposants ».

**16.** Utilisation selon la revendication 13 ou 14, **caractérisée en ce qu'**il s'agit de revêtements en poudre.

**17.** Revêtement **caractérisé en ce qu'**il résulte de l'utilisation d'au moins une résine telle que définie selon l'une des revendications 1 à 9 ou d'une solution de résine telle que définie selon la revendication 10 ou d'une composition de revêtement telle que définie selon la revendication 11 ou 12.

**18.** Revêtement selon la revendication 17, **caractérisé en ce qu'**il s'agit d'un revêtement de feuille métallique (« coil coating ») ou revêtement interne ou externe d'emballage métallique (« packaging coating »).

## EP 3 959 252 B1

**Patentansprüche**

1. Hydroxyliertes und/oder carboxyliertes Polyesterharz, **dadurch gekennzeichnet, dass** es in seiner Struktur Estereinheiten umfasst, die aus einer Polyolkomponente a) und einer Polycarbonsäurekomponente b) gebildet sind, wobei die Polyolkomponente a) mindestens ein Polyol a1) umfasst, das aus Fettsäuretriglyceriden

$$R\text{-}CO_2\text{-}(H)C\text{-}(CH_2\text{-}CO_2\text{-}R)_2 \qquad (I)$$

ausgewählt ist, wobei es sich bei R um die Restgruppe ohne Carboxygruppe einer hydroxylierten und/oder epoxidierten Fettsäure $RCO_2H$ handelt, wobei R 13 bis 21, vorzugsweise 13 bis 19, Kohlenstoffatome und mindestens eine Hydroxy- und/oder Expoxygruppe umfasst,
wobei das Harz eine Hydroxyzahl von 10 bis 120 mg KOH/g aufweist, die gemäß dem in der Beschreibung aufgeführten Verfahren gemessen wird.

2. Polyesterharz nach Anspruch 1, **dadurch gekennzeichnet, dass** das Triglycerid aus den Triglyceriden von 9- und/oder 10-Hydroxystearinsäure, 12-Hydroxystearinsäure, 14-Hydroxyeicosansäure, 12-Hydroxy-9-octadecensäure und/oder ihrer epoxidierten Form, Lesquerolsäure (14-Hydroxy-11-cis-eicosensäure) und/oder ihrer epoxidierten Form oder epoxidiertem Sojaöl ausgewählt ist.

3. Polyesterharz nach Anspruch 1 oder 2, **dadurch gekennzeichnet, dass** der Gewichtsanteil des Triglyceridpolyols a1), bezogen auf das Gewicht des Harzes, von bis 1 bis 30 %, vorzugsweise von 2 bis 25 %, stärker bevorzugt von 2 bis 15 %, stärker bevorzugt von 3 bis 12 %, noch stärker bevorzugt von 4 bis 10 %, reicht.

4. Harz nach einem der Ansprüche 1 bis 3, **dadurch gekennzeichnet, dass** es eine Polycarbonsäurekomponente b) aufweist, die Folgendes umfasst:

   b1) mindestens eine aromatische Disäure oder ihr Anhydrid, die vorzugsweise 20 bis 75 Gew.-% des Harzes darstellt
   b2) gegebenenfalls mindestens eine lineare aliphatische $C_4$- bis $C_{10}$-, vorzugsweise $C_4$- bis $C_8$-Disäure und/oder eine dimere Disäure einer $C_{32}$- bis $C_{36}$-Fettsäure,
   b3) gegebenenfalls mindestens eine cycloaliphatische Disäure.

5. Harz nach einem der Ansprüche 1 bis 4, **dadurch gekennzeichnet, dass** das Harz eine Hydroxyzahl von 15 bis 100, von 20 bis 80, von 25 bis 75, von 30 bis 60 oder von 35 bis 50 mg KOH/g aufweist.

6. Harz nach einem der Ansprüche 1 bis 5, **dadurch gekennzeichnet, dass** das Harz eine Hydroxyzahl von kleiner als oder gleich 20, kleiner als oder gleich 15, kleiner als oder gleich 10, kleiner als oder gleich 7 oder kleiner als oder gleich 5 mg KOH/g aufweist.

7. Harz nach einem der Ansprüche 1 bis 6, **dadurch gekennzeichnet, dass** es eine mittels DSC mit 10 °C/min gemessene Glasübergangstemperatur von -10 °C bis 100, vorzugsweise von -10 bis 50 °C und stärker bevorzugt von 0 °C bis 40 °C, aufweist.

8. Harz nach einem der Ansprüche 1 bis 7, **dadurch gekennzeichnet, dass** mindestens 50 Gew.-%, vorzugsweise mindestens 75 Gew.-%, des Harzes biobasiert sind.

9. Harz nach einem der Ansprüche 1 bis 8, **dadurch gekennzeichnet, dass** es ein Zahlenmittel Mn der Molmasse, das gemäß dem in der Beschreibung aufgeführten Verfahren gemessen wird, von 500 bis 20000, vorzugsweise von 750 bis 10000, aufweist.

10. Harzlösung in einem organischen Lösungsmittel, **dadurch gekennzeichnet, dass** sie außer dem Lösungsmittel mindestens ein Harz gemäß der Definition in einem der Ansprüche 1 bis 9 umfasst.

11. Beschichtungszusammensetzung vorzugsweise in einem organischen Lösungsmittelmedium, vorzugsweise vernetzbare Zusammensetzung, die mindestens ein Harz gemäß der Definition in einem der Ansprüche 1 bis 9 oder eine Harzlösung gemäß der Definition in Anspruch 10 umfasst.

**12.** Zusammensetzung nach Anspruch 11, **dadurch gekennzeichnet, dass** sie vernetzbar ist und neben dem Harz mindestens ein Vernetzungsmittel umfasst, das gegenüber den reaktiven Gruppen des Harzes reaktive Gruppen trägt.

**13.** Verwendung eines Harzes gemäß der Definition in einem der Ansprüche 1 bis 9 oder einer Harzlösung gemäß der Definition in Anspruch 10 in vernetzbaren Beschichtungszusammensetzungen in einem organischen Lösungsmittelmedium.

**14.** Verwendung nach Anspruch 13, **dadurch gekennzeichnet, dass** es sich um Beschichtungszusammensetzungen mit "Einkomponenten"-Verhalten für Metall, insbesondere zum Auftragen auf Metallfolie ("Coil Coating") und eine Innen- oder Außenbeschichtung einer Metallverpackung ("Verpackungsbeschichtung") handelt.

**15.** Verwendung nach Anspruch 13, **dadurch gekennzeichnet, dass** es sich um "Zweikomponenten"-Beschichtungen handelt.

**16.** Verwendung nach Anspruch 13 oder 14, **dadurch gekennzeichnet, dass** es sich um Pulverbeschichtungen handelt.

**17.** Beschichtung, **dadurch gekennzeichnet, dass** sie aus der Verwendung mindestens eines Harzes gemäß der Definition in einem der Ansprüche 1 bis 9 oder einer Harzlösung gemäß der Definition in Anspruch 10 oder einer Beschichtungszusammensetzung gemäß der Definition in Anspruch 11 oder 12 resultiert.

**18.** Beschichtung nach Anspruch 17, **dadurch gekennzeichnet, dass** es sich um eine Metallblechbeschichtung ("Coil Coating") oder eine Innen- oder Außenbeschichtung einer Metallverpackung ("Verpackungsbeschichtung") handelt.

## Claims

**1.** Hydroxylated and/or carboxylated polyester resin, **characterized in that** it comprises, in its structure, ester units formed from a polyol component a) and from a polyacid component b), the polyol component a) comprising at least one polyol a1) chosen from fatty acid triglycerides:

$$R\text{-}CO_2\text{-}(H)C\text{-}(CH_2\text{-}CO_2\text{-}R)_2 \qquad (I)$$

with R being the residue radical without a carboxyl group of a hydroxylated and/or epoxidized fatty acid $RCO_2H$ with R comprising from 13 to 21, preferably from 13 to 19, carbon atoms and at least one hydroxyl and/or epoxy group,
the resin having a hydroxyl number of 10 to 120 mg KOH/g, measured according to the method shown in the description.

**2.** Polyester resin according to Claim 1, **characterized in that** said triglyceride is chosen from the triglycerides of 9- and/or 10-hydroxystearic acid, 12-hydroxystearic acid, 14-hydroxyeicosanoic acid, 12-hydroxy-9-octadecenoic acid and/or its epoxidized form, lesquerolic (14-hydroxy-cis-11-eicosenoic) acid and/or its epoxidized form, or epoxidized soybean oil.

**3.** Polyester resin according to Claim 1 or 2, **characterized in that** the content by weight of said polyol triglyceride a1) with respect to the weight of said resin varies from 1% to 30%, preferably from 2% to 25%, more preferentially from 2% to 15%, more preferentially from 3% to 12%, in a more preferred way from 4% to 10%.

**4.** Resin according to one of Claims 1 to 3, **characterized in that** it has a polyacid component b) which comprises:

b1) at least one aromatic diacid or its anhydride, preferably representing from 20% to 75% by weight of said resin,
b2) optionally, at least one linear $C_4$ to $C_{10}$, preferably $C_4$ to $C_8$, aliphatic diacid and/or one $C_{32}$ to $C_{36}$ fatty acid dimer diacid,
b3) optionally, at least one cycloaliphatic diacid.

**5.** Resin according to one of Claims 1 to 4, **characterized in that** said resin has a hydroxyl number of 15 to 100, of 20 to 80, of 25 to 75, of 30 to 60 or of 35 to 50 mg KOH/g.

6. Resin according to one of Claims 1 to 5, **characterized in that** said resin has a carboxyl number of less than or equal to 20, of less than or equal to 15, of less than or equal to 10, of less than or equal to 7 or of less than or equal to 5 mg KOH/g.

7. Resin according to one of Claims 1 to 6, **characterized in that** it has a glass transition temperature, measured by DSC, at 10°C/min, of -10°C to 100°C, preferably of -10°C to 50°C and more preferentially of 0°C to 40°C.

8. Resin according to one of Claims 1 to 7, **characterized in that** at least 50%, preferably at least 75%, by weight of said resin is biobased.

9. Resin according to one of Claims 1 to 8, **characterized in that** it has a number-average molecular weight $M_n$, calculated according to the method shown in the description, ranging from 500 to 20 000, preferably from 750 to 10 000.

10. Solution of resin in an organic solvent, **characterized in that** it comprises, in addition to said solvent, at least one resin as defined according to one of Claims 1 to **9.**

11. Coating composition, preferably in an organic solvent medium, preferably a crosslinkable composition, comprising at least one resin as defined according to one of Claims 1 to 9 or a resin solution as defined according to Claim 10.

12. Composition according to Claim 11, **characterized in that** it is crosslinkable and comprises, in addition to said resin, at least one crosslinking agent carrying groups which react with the reactive groups of said resin.

13. Use of a resin as defined according to one of Claims 1 to 9 or of a resin solution as defined according to Claim 10 in crosslinkable coating compositions in an organic solvent medium.

14. Use according to Claim 13, **characterized in that** it concerns coating compositions having a "one-component" behaviour for metal, in particular for coating on metal sheet (coil coating) and internal or external coating of metal packaging (packaging coating).

15. Use according to Claim 13, **characterized in that** it concerns "two-component" coatings.

16. Use according to Claim 13 or 14, **characterized in that** it concerns powder coatings.

17. Coating, **characterized in that** it results from the use of at least one resin as defined according to one of Claims 1 to 9 or of a resin solution as defined according to Claim 10 or of a coating composition as defined according to Claim 11 or 12.

18. Coating according to Claim 17, **characterized in that** it concerns a coating of metal sheet (coil coating) or internal or external coating of metal packaging (packaging coating).

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 107828053 A

- WO 2016203136 A